# EUROPEAN PATENT APPLICATION

(11) **EP 2 610 871 A1**
(43) Date of publication of application: **03.07.2013**
(21) Application number: 11196150.4
(22) Date of filing: 30.12.2011
(51) Int. Cl.: G11B 27/10, G11B 27/28, G06K 9/46, G06T 7/40, G06F 17/30

(54) **Methods and apparatus for use in providing object indicators during video recording or playback**

(71) Applicant: Research In Motion Limited, Waterloo, ON N2L 3W8 (CA)
(72) Inventor: Coskun, Risvan, Kanata, Ontario K2K 3K1 (CA); Banadaki, Jafar Shafaeddin, Kanata, Ontario K2K 3K1 (CA); Mubarek, Omer, Kanata, Ontario K2K 3K1 (CA)
(74) Representative: Bryn-Jacobsen, Caelia

(57) **Abstract**

Techniques for use in providing object indicators for video recording or playback are described. A mobile device includes a media recorder module and a sensor device. The media recorder module is used to record video data in a media file. The sensor device detects signals which indicate the presence of an object during a time period of the recording. The mobile device receives object data comprising an identification of the object, and stores the object data in association with timestamp data which corresponds to the time period during which the object is present during the recording.

## Description

### BACKGROUND

### Field of the Technology

The present disclosure relates generally to electronic devices, such as mobile communication devices operating in wireless communication networks, having media player/recorder modules.

### Description of the Related Art

When a media file is played on a computer or an electronic device, there are metadata associated with the media file. Traditionally, the metadata associated with a media file are descriptive of the file's data as a whole. For audio media files, such as songs, the metadata may include the artist's name, information about the artist, the album name, the track name, a track number, etc. With respect to video files, the metadata may include actor names, directors, producers, movie trivia on particular scenes/actors/producer/directors, etc. The metadata information is typically integrated within the media file.

When the media file is played, the metadata may be accessed by or rendered through a media player, Traditionally, the metadata that are available with the media file is static in nature and provides only a single definition regarding the contents in the media file, as the metadata is generally provided by the content provider before dissemination to the public. The metadata are also not dynamically presented during the playing of the media file, but can be accessed before or after play. In some cases, the metadata provided with the media file may include sub-title tracks as well as accompanying video. This metadata are also predefined.

Accordingly, what are needed are methods and apparatus to overcome limitations and deficiencies of the prior art.

### BRIEF DESCRIPTION OF THE DRAWINGS

Embodiments of present invention will now be described by way of example with reference to attached figures, wherein:
FIG. 1 is a block diagram which illustrates pertinent components of a mobile communication device and a wireless communication network;
FIG. 2 is a more detailed diagram of one type of mobile device of FIG. 1;
FIG. 3 is a flowchart for a method for use in providing object indicators during recording or playback of a media file;
FIG. 4 is a flowchart for a method for use in providing object indicators during playback of the media file;
FIG. 5 is a flowchart for a more detailed method for use in providing object indicators during recording or playback of a media file; and
FIG. 6 is an illustrative depiction of a mobile communication device which having a display for displaying video recording or playback per the techniques of the present disclosure.

### DETAILED DESCRIPTION OF THE PREFERRED EMBODIMENTS

The present disclosure relates to the integration of time-based metadata with media files. In general, time-based metadata includes tagged timestamps associated with the contents of a media file. A plurality of tags associated with the time-based metadata may be defined in the media file. When the contents of the media file are rendered by a media player, the associated tags are identified which render the corresponding time-based metadata. More particularly, specific metadata is associated with specific content of the media file and at a timestamp of play of the media file. A tag is generated containing the timestamp and reference to the identified metadata. The tag is linked to the media file, so that the media player identifies the tag during the play of the media file and presents the identified metadata upon reaching the time code of play, along with the presentation of content of the media file.

Within this context, techniques for use in a mobile communication device for providing object indicators for video recording and/or playback have been devised. The mobile device includes a media recorder/player module and a sensor device. The media recorder module is used to record video data in a media file. The sensor device detects signals which indicate the presence of an object during a time period of recording. The mobile device receives object data comprising an identification of the object, and stores the object data in association with timestamp data which corresponds to the time period during which the object is present during the recording.

More particularly, the mobile device may identify a detected position of the object in the video, and store position data corresponding to the detected position of the object in association with the timestamp data. For example, the mobile device may receive via the sensor device visual identification data for visually identifying the object. The mobile device produces, based on the visual identification data, an image array of a representative image of the object. The mobile device may then detect from the video data an actual image of the object that matches the representative image of the object. The actual image being positioned at x-y coordinates in the video. The mobile device may then store the x-y coordinates in association with the timestamp, and/or display an object indicator at the x-y coordinates.

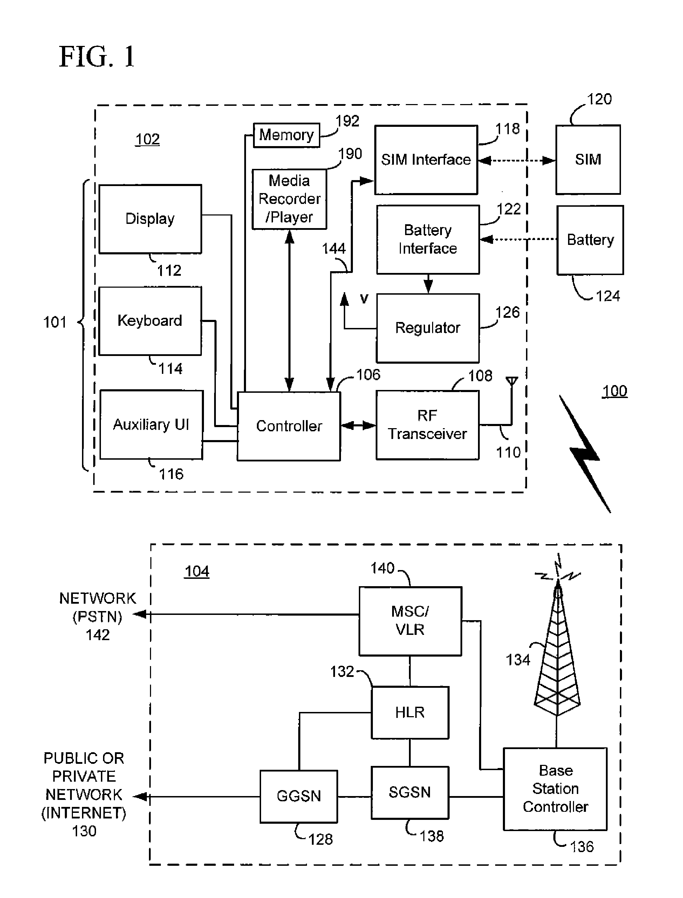

To illustrate an exemplary environment for practicing the techniques of the present disclosure, FIG. 1 is a block diagram of a communication system 100 which includes a mobile communication device 102 which communicates in a wireless communication network 104. Mobile device 102 has a user interface 101 which may include a visual display 112, a keyboard 114, and perhaps one or more auxiliary user interfaces (UI) 116, each of which are coupled to a controller 106. Mobile device 102 also includes a media recorder and/or player module 190 coupled to controller 106. Controller 106 is also coupled to radio frequency (RF) transceiver circuitry 108 and an antenna 110. Typically, controller 106 is embodied as a central processing unit (CPU) which runs operating system software in a memory 192. Controller 106 will normally control overall operation of mobile device 102, whereas signal processing operations associated with communication functions are typically performed in RF transceiver circuitry 108.

Controller 106 interfaces with device display 112 to display received information, stored information, user inputs, and the like. Keyboard 114, which may be a telephone type keypad or full alphanumeric keyboard, is normally provided for entering data for storage in mobile device 102, information for transmission to the network, a telephone number to place a telephone call, commands to be executed on mobile device 102, and possibly other or different user inputs.

Mobile device 102 sends communication signals to and receives communication signals from network 104 over a wireless link via antenna 110. RF transceiver circuitry 108 performs functions similar to those of a base transceiver station (BTS) 134 and a base station controller (BSC) 136 (described later below), including for example modulation/demodulation and possibly encoding/decoding and encryption/decryption. It is contemplated that RF transceiver circuitry 108 may perform certain functions in addition to those performed by BTS 134/BSC 136. It will be apparent to those skilled in art that RF transceiver circuitry 108 will be adapted to particular wireless network or networks in which mobile device 102 is intended to operate.

BTS 134 and BSC 136 may be referred to as a base station subsystem (BSS) and part of the radio access network (RAN). BSC 136 is associated with a GSM/EDGE Radio Access Network (GERAN) system, but other networks nodes such as radio network controller (RNC) or E-UTRAN Node_B (eNB) may be employed for UMTS or LTE, respectively. Others networks, not necessarily conforming to 3GPP standards, for example, networks conforming to IEEE or IETF standards, may alternatively be utilized.

Mobile device 102 includes a battery interface 122 for receiving one or more rechargeable batteries 124. Battery 124 provides electrical power to electrical circuitry in mobile device 102, and battery interface 122 provides for a mechanical and electrical connection for battery 124. Battery interface 122 is coupled to a regulator 126 which regulates power to the device. Mobile device 102 may be a handheld portable communication device, which includes a housing (e.g. a plastic housing) which carries and contains the electrical components of mobile device 102 including battery 124.

Mobile device 102 operates using a Subscriber Identity Module (SIM) or Universal SIM (USIM) 120 which is connected to or inserted in mobile device 102 at a SIM or USIM interface 118. SIM/USIM 120 is one type of a conventional "smart card" used to identify an end user (or subscriber) of mobile device 102 and to personalize the device, among other things. By inserting SIM/USIM 120 into mobile device 102, an end user can have access to any and all of his/her subscribed services. SIM/USIM 120 generally includes a processor and memory for storing information. Since SIM/USIM 120 is coupled to SIM/USIM interface 118, it is coupled to controller 106 through communication lines 144. In order to identify the subscriber, SIM/USIM 120 contains some user parameters such as an International Mobile Subscriber Identity (IMSI). An advantage of using SIM/USIM 120 is that end users are not necessarily bound by any single physical mobile device. SIM/USIM 120 may store additional user information for the mobile device as well, including datebook (or calendar) information and recent call information.

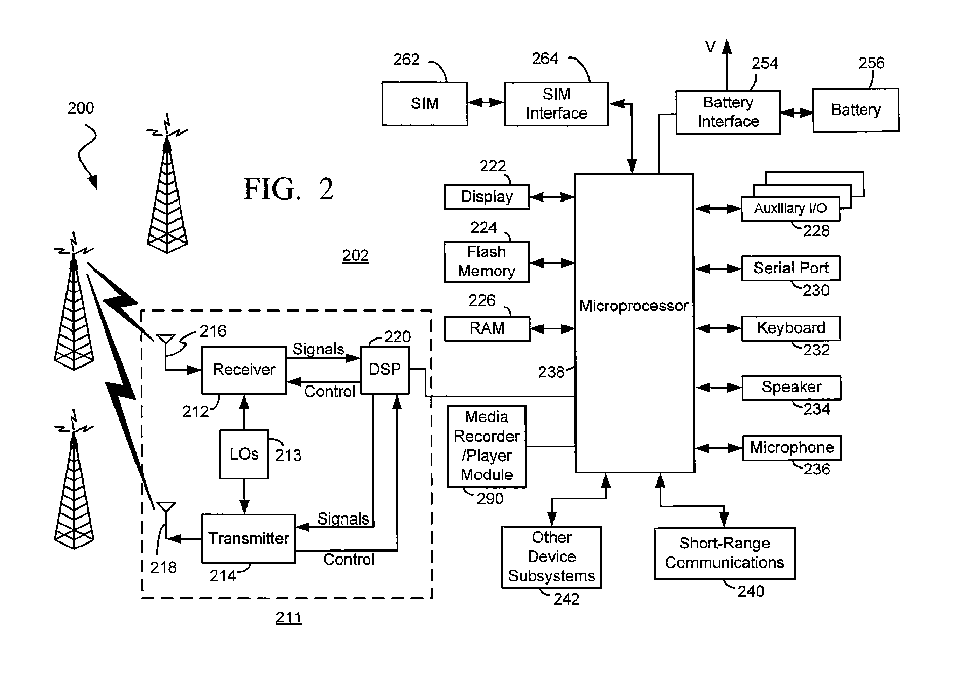

Mobile device 102 may consist of a single unit, such as a data communication device, a cellular telephone, a multiple-function communication device with data and voice communication capabilities, a personal digital assistant (PDA) enabled for wireless communication, or a computer incorporating an internal modem. Preferably, as mentioned earlier, mobile device 102 is a handheld portable communication device which includes a housing (e.g. a plastic housing) which carries and contains the electrical components of mobile device 102. Alternatively, mobile device 102 may be a multiple-module unit comprising a plurality of separate components, including but in no way limited to a computer or other device connected to a wireless modem. In particular, for example, in the mobile device block diagram of FIG. 1, RF transceiver circuitry 108 and antenna 110 may be implemented as a radio modem unit that may be inserted into a port on a laptop computer. In this case, the laptop computer would include display 112, keyboard 114, one or more auxiliary UIs 116, and controller 106 embodied as the computer's CPU. It is also contemplated that a computer or other equipment not normally capable of wireless communication may be adapted to connect to and effectively assume control of RF transceiver circuitry 108 and antenna 110 of a single-unit device such as one of those described above. Such a mobile device 102 may have a more particular implementation as described later in relation to mobile device 202 of FIG. 2.

Mobile device 102 communicates in and through wireless communication network 104. Wireless communication network 104 may be a cellular telecommunications network. In the embodiment of FIG. 1, wireless network 104 is configured in accordance with General Packet Radio Service (GPRS) and a Global System for Mobile communications (GSM) technologies. Such a mobile device may further operate in accordance with High-Speed Downlink Packet Access (HSPDA), HSPDA+, Long Term Evolution (LTE), Enhanced Data rates for GSM Evolution (EDGE), Enhanced GPRS (EGPRS), or any other suitable technology. In such environment, wireless network 104 includes BSC 136 with associated BTS 134, a Mobile Switching Center (MSC) 140, a Home Location Register (HLR) 132, a Serving General Packet Radio Service (GPRS) Support Node (SGSN) 138, and a Gateway GPRS Support Node (GGSN) 128. MSC 140 is coupled to BSC 136 and to a landline network, such as a Public Switched Telephone Network (PSTN) 142. SGSN 138 is coupled to BSC 136 and to GGSN 128, which is in turn coupled to a public or private data network 130 (such as the Internet). HLR 132 is coupled to MSC 140, SGSN 138, and GGSN 128.

BTS 134 is a fixed transceiver station, and BTS 134 and BSC 136 may together be referred to as a base station subsystem (BSS). The BSS provides wireless network coverage for a particular coverage area commonly referred to as a "cell". The BSS transmits communication signals to and receives communication signals from mobile devices within its cell via station 134. The BSS normally performs such functions as modulation and possibly encoding and/or encryption of signals to be transmitted to the mobile device in accordance with particular, usually predetermined, communication protocols and parameters, under control of its controller. The BSS similarly demodulates and possibly decodes and decrypts, if necessary, any communication signals received from mobile device 102 within its cell. Communication protocols and parameters may vary between different networks. For example, one network may employ a different modulation scheme and operate at different frequencies than other networks.

The wireless link shown in communication system 100 of FIG. 1 represents one or more different channels, typically different radio frequency (RF) channels, and associated protocols used between wireless network 104 and mobile device 102. An RF channel is a limited resource that must be conserved, typically due to limits in overall bandwidth and a limited battery power of mobile device 102. Those skilled in art will appreciate that a wireless network in actual practice may include hundreds of cells, each served by a station or station sector, depending upon desired overall expanse of network coverage. All pertinent components may be connected by multiple switches and routers (not shown), controlled by multiple network controllers.

For all mobile device's 102 registered with a network operator, permanent data (such as mobile device 102 user's profile) as well as temporary data (such as mobile device's 102 current location) are stored in HLR 132. In case of a voice call to mobile device 102, HLR 132 is queried to determine the current location of mobile device 102. A Visitor Location Register (VLR) of MSC 140 is responsible for a group of location areas and stores the data of those mobile devices that are currently in its area of responsibility. This includes parts of the permanent mobile device data that have been transmitted from HLR 132 to the VLR for faster access. However, the VLR of MSC 140 may also assign and store local data, such as temporary identifications. Optionally, the VLR of MSC 140 can be enhanced for more efficient co-ordination of GPRS and non-GPRS services and functionality (e.g. paging for circuit-switched calls which can be performed more efficiently via SGSN 138, and combined GPRS and non-GPRS location updates).

Serving GPRS Support Node (SGSN) 138 is at the same hierarchical level as MSC 140 and keeps track of the individual locations of mobile devices. SGSN 138 also performs security functions and access control. Gateway GPRS Support Node (GGSN) 128 provides interworking with external packet-switched networks and is connected with SGSNs (such as SGSN 138) via an IP-based GPRS backbone network. SGSN 138 performs authentication and cipher setting procedures based on algorithms, keys, and criteria (e.g. as in existing GSM). In conventional operation, cell selection may be performed autonomously by mobile device 102 or by the transceiver equipment instructing mobile device 102 to select a particular cell. Mobile device 102 informs wireless network 104 when it reselects another cell or group of cells, known as a routing area.

In order to access GPRS services, mobile device 102 first makes its presence known to wireless network 104 by performing what is known as a GPRS "attach". This operation establishes a logical link between mobile device 102 and SGSN 138 and makes mobile device 102 available to receive, for example, pages via SGSN, notifications of incoming GPRS data, or SMS messages over GPRS. In order to send and receive GPRS data, mobile device 102 assists in activating the packet data address that it wants to use. This operation makes mobile device 102 known to GGSN 128; interworking with external data networks can thereafter commence. User data may be transferred transparently between mobile device 102 and the external data networks using, for example, encapsulation and tunneling. Data packets are equipped with GPRS-specific protocol information and transferred between mobile device 102 and GGSN 128.

FIG. 2 is a detailed block diagram of one type of mobile device 202 of the present disclosure, which may be referred to as a mobile station (MS), mobile equipment (ME), a user equipment (UE), or the like. Mobile device 202 is preferably a two-way communication device having at least voice and advanced data communication capabilities, including the capability to communicate with other computer systems. Depending on the functionality provided by mobile device 202, it may be referred to as a data messaging device, a two-way pager, a cellular telephone with data messaging capabilities, a wireless Internet appliance, or a data communication device (with or without telephony capabilities). Mobile device 202 may communicate with any one of a plurality of fixed transceiver stations 200 within its geographic coverage area. Mobile device 2022 also includes a media recorder and/or player module 290.

Mobile device 202 will normally incorporate a communication subsystem 211, which includes a receiver 212, a transmitter 214, and associated components, such as one or more (preferably embedded or internal) antenna elements 216 and 218, local oscillators (LOs) 213, and a processing module such as a digital signal processor (DSP) 220. Communication subsystem 211 is analogous to RF transceiver circuitry 108 and antenna 110 shown in FIG. 1. As will be apparent to those skilled in field of communications, particular design of communication subsystem 211 depends on the communication network in which mobile device 202 is intended to operate.

Mobile device 202 may send and receive communication signals over the network after required network registration or activation procedures have been completed. Signals received by antenna 216 through the network are input to receiver 212, which may perform such common receiver functions as signal amplification, frequency down conversion, filtering, channel selection, and like, and in example shown in FIG. 2, analog-to-digital (A/D) conversion. A/D conversion of a received signal allows more complex communication functions such as demodulation and decoding to be performed in DSP 220. In a similar manner, signals to be transmitted are processed, including modulation and encoding, for example, by DSP 220. These DSP-processed signals are input to transmitter 214 for digital-to-analog (D/A) conversion, frequency up conversion, filtering, amplification and transmission over communication network via antenna 218. DSP 220 not only processes communication signals, but also provides for receiver and transmitter control. For example, the gains applied to communication signals in receiver 212 and transmitter 214 may be adaptively controlled through automatic gain control algorithms implemented in DSP 220.

Network access is associated with a subscriber or user of mobile device 202, and therefore mobile device 202 may utilize a Subscriber Identity Module or "SIM" or Universal SIM "USIM" card 262 to be inserted in a SIM/USIM interface 264 in order to operate in the network. SIM/USIM 262 includes those features described in relation to FIG. 1. Mobile device 202 is a battery-powered device so it also includes a battery interface 254 for receiving one or more rechargeable batteries 256. Such a battery 256 provides electrical power to most if not all electrical circuitry in mobile device 202, and battery interface 254 provides for a mechanical and electrical connection for it. The battery interface 254 is coupled to a regulator (not shown) which provides a regulated voltage to all of the circuitry.

Mobile device 202 includes a microprocessor 238 (which is one implementation of controller 106 of FIG. 1) which controls overall operation of mobile device 202. Communication functions, including at least data and voice communications, are performed through communication subsystem 211. The techniques of the present disclosure may generally be controlled by one or more processors, such as microprocessor 238. Microprocessor 238 also interacts with additional device subsystems such as a display 222, a flash memory 224, a random access memory (RAM) 226, auxiliary input/output (I/O) subsystems 228, a serial port 230, a keyboard 232, a speaker 234, a microphone 236, a short-range communications subsystem 240, and any other device subsystems generally designated at 242. Some of the subsystems shown in FIG. 2 perform communication-related functions, whereas other subsystems may provide "resident" or on-device functions. Notably, some subsystems, such as keyboard 232 and display 222, for example, may be used for both communication-related functions, such as entering a text message for transmission over a communication network, and device-resident functions such as a calculator or task list. Operating system software used by microprocessor 238 is preferably stored in a non-volatile storage device such as flash memory 224, which may alternatively be a read-only memory (ROM) or similar storage element (not shown). Those skilled in the art will appreciate that the operating system, specific device applications, or parts thereof, may be temporarily loaded into a volatile store such as RAM 226.

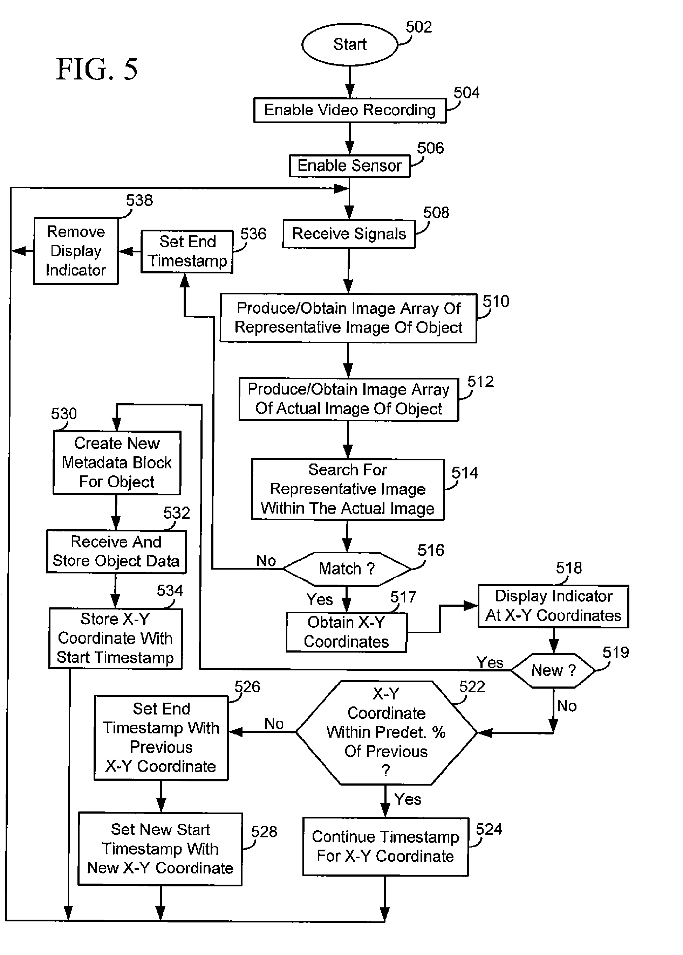

Microprocessor 238, in addition to its operating system functions, preferably enables execution of software applications on mobile device 202. A predetermined set of applications which control basic device operations, including at least data and voice communication applications, will normally be installed on mobile device 202 during its manufacture. A preferred application that may be loaded onto mobile device 202 may be a personal information manager (PIM) application having the ability to organize and manage data items relating to user such as, but not limited to, e-mail, calendar events, voice mails, appointments, and task items. Naturally, one or more memory stores are available on mobile device 202 and SIM 256 to facilitate storage of PIM data items and other information. The PIM application preferably has the ability to send and receive data items via the wireless network. In the present disclosure, PIM data items are seamlessly integrated, synchronized, and updated via the wireless network, with the mobile device user's corresponding data items stored and/or associated with a host computer system thereby creating a mirrored host computer on mobile device 202 with respect to such items. This is especially advantageous where the host computer system is the mobile device user's office computer system. Additional applications may also be loaded onto mobile device 202 through network, an auxiliary I/O subsystem 228, serial port 230, short-range communications subsystem 240, or any other suitable subsystem 242, and installed by a user in RAM 226 or preferably a non-volatile store (not shown) for execution by microprocessor 238. Such flexibility in application installation increases the functionality of mobile device 202 and may provide enhanced on-device functions, communication-related functions, or both. These applications will be described later in relation to FIG. 5 below.

In a data communication mode, a received signal such as a text message, an e-mail message, or web page download will be processed by communication subsystem 211 and input to microprocessor 238. Microprocessor 238 will preferably further process the signal for output to display 222 or alternatively to auxiliary I/O device 228. A user of mobile device 202 may also compose data items, such as e-mail messages, for example, using keyboard 232 in conjunction with display 222 and possibly auxiliary I/O device 228. Keyboard 232 is preferably a complete alphanumeric keyboard and/or telephone-type keypad. These composed items may be transmitted over a communication network through communication subsystem 211. For voice communications, the overall operation of mobile device 202 is substantially similar, except that the received signals would be output to speaker 234 and signals for transmission would be generated by microphone 236. Alternative voice or audio I/O subsystems, such as a voice message recording subsystem, may also be implemented on mobile device 202. Although voice or audio signal output is preferably accomplished primarily through speaker 234, display 222 may also be used to provide an indication of the identity of a calling party, duration of a voice call, or other voice call related information, as some examples.

Serial port 230 in FIG. 2 is normally implemented in a personal digital assistant (PDA)-type communication device for which synchronization with a user's desktop computer is a desirable, albeit optional, component. Serial port 230 enables a user to set preferences through an external device or software application and extends the capabilities of mobile device 202 by providing for information or software downloads to mobile device 202 other than through a wireless communication network. The alternate download path may, for example, be used to load an encryption key onto mobile device 202 through a direct and thus reliable and trusted connection to thereby provide secure device communication. Short-range communications subsystem 240 of FIG. 2 is an additional optional component which provides for communication between mobile device 202 and different systems or devices, which need not necessarily be similar devices.

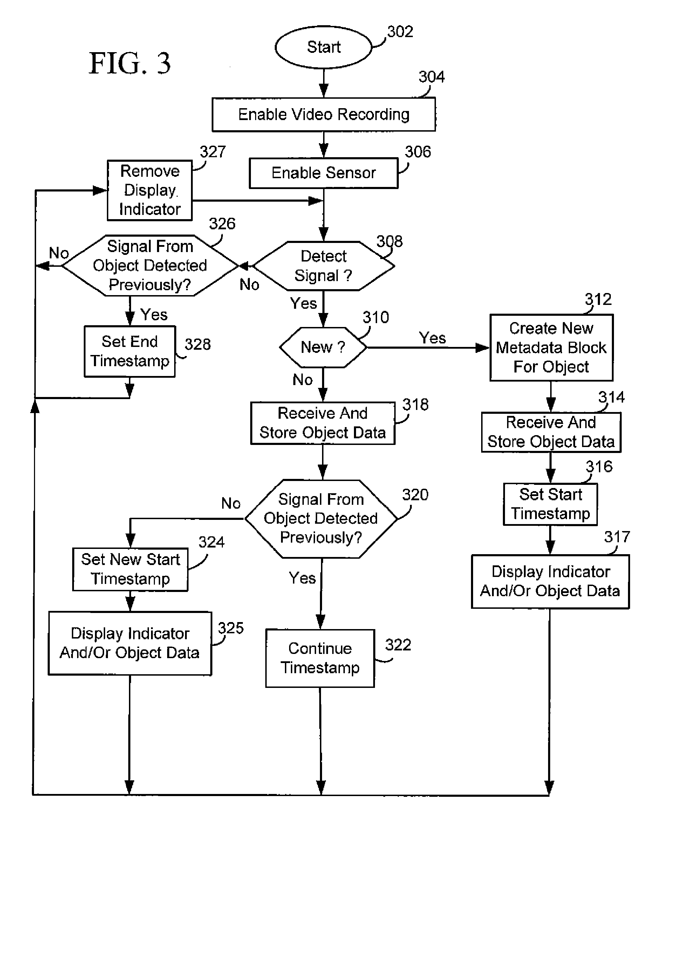

FIG. 3 is a flowchart which helps describe a method for use in providing object indicators during recording of a media file. Such methods may overcome the above-described deficiencies of the prior art in the above-described environment, or in related or similar environments. The methods may be executed by a mobile device (e.g. see description in relation to FIGs. 1-2 above). The methods may be further embodied in a computer program product which includes a computer readable medium (e.g. memory or disk, etc. in the mobile device) and computer instructions stored in the computer readable medium which are executable by one or more processors of the mobile device. The method of FIG. 3 may be performed for one or more different sensor devices in the mobile device and/or one or more different objects at the same time.

Note that, in the technique of FIG. 3, one or more metadata blocks for the media file are created during recording such that they may include one or more timestamp ranges (e.g. a plurality of timestamp ranges), where each timestamp range includes a start timestamp and an end timestamp, corresponding to the presence of an object in the video. The timestamps correspond to playback positions in the video.

Beginning at a start block 302 of FIG. 3, the processor of the mobile device enables video recording in response to detecting a predetermined input (step 304 of FIG. 3). For example, the processor may enable video recording in response to detecting, via the user interface of the mobile device, an input request from the user to perform video recording. Here, the processor may activate the media recorder module to record video data in a media file.

The mobile device also enables a sensor device in the mobile device (step 306 of FIG. 3), if not previously enabled. The sensor device is configured to receive and detect signals which indicate the presence of one or more objects within view and/or a nearby geographic location. The sensor device may be a cellular transceiver, a WLAN or WiFi transceiver (e.g. IEEE 802.11 compliant, IEEE 802.16 compliant, etc.), a BLUETOOTH transceiver, a GPS receiver, an RF ID detector, as examples, of the mobile device.

The sensor device may be a specifically manufactured sensor device for the type of object identification and description broadcasting described herein. Further, any computational platform capable of wireless communication with suitable software/firmware client embedded therein may be converted into such a sensor device for facilitating the type of object identification and description broadcasting described herein.

Note that the object itself may be associated with a corresponding object transceiver, transmitter, or component. The sensor device may therefore receive signals directly from such object component, or indirectly from the object component via a wireless network (e.g. a cellular network, a WLAN or WiFi network, etc.). In one embodiment, the sensor device receives from the wireless network signals which indicate the presence of one or more such objects within view and/or a nearby geographic location.

These signals which indicate the presence of the object may be detected during a time period of the recording (step 308 of FIG. 3). If such signals are detected at step 308, then the mobile device identifies whether such detection is a new detection of such signals (step 310 of FIG. 3). For example, a new detection of signals may be the first time that signals indicating the presence of the object have been detected for the current recording session. If such detection is identified as "new" at step 310 (i.e. the first time that the signals have been detected for the current recording session), then the processor creates a new metadata block for the object.

The processor receives object data associated with the object, and stores the object data in the metadata block for the object (step 314 of FIG. 3). The processor may receive and store the object data through the signals received via the sensor device in step 308. Alternatively, the processor may receive the object data via other means, such as retrieving the object data from a server via the wireless or cellular network.

The object data includes at least object identification which identifies the object. The object identification may identify the object by its name, with alphanumeric characters or text, for example. The object data may also include an address or link to a server, where the server is configured to communicate information regarding the object to the mobile device for display in response to a request from the mobile device (e.g. by "clicking" on the address or the link).

The processor also receives timestamp data corresponding to a current time of recording of the video data. The processor initializes or sets a start timestamp in the metadata block for the object to be the current time of recording (step 316 of FIG. 3). Further, the processor may cause an object indicator and/or the object identification to be displayed in the display (step 317 of FIG. 3). The object indicator identifies or indicates in the display the presence of the object. In one embodiment, the processor identifies a detected position of the object in the video, and displays the object indicator at the detected position in the display. Processing then proceeds back to step 308.

If the detection of signals in step 308 is identified as not being new at step 310 (i.e. it is not the first time that signals indicating the presence of the object have been detected for the current recording session), then the processor may optionally receive updated object data associated with the object, and store this updated object data in the metadata block for the object (step 318 of FIG. 3).

The processor further identifies whether a signal from the object was detected in N previous iterations (N = 1, 2, 3, ...) (step 320 of FIG. 3). If yes in step 320 (i.e. the signals are continuing to be detected), then the processor may include or add an additional timestamp in the metadata block for the object to be the current time of recording (step 322 of FIG. 3). In one embodiment, step 322 may involve updating the end timestamp in the metadata block for the object to be the current time of recording. In another embodiment, no adding or updating is performed in step 322, as the end timestamp will be updated later in step 328 when signal loss is detected (as described later below). Processing then proceeds back to step 308. If no in step 320 (i.e. signal detection is now regained after a loss of signal detection), then the processor includes or adds an additional start timestamp in the metadata block for the object to be the current time of recording (step 324 of FIG. 3).

The processor then causes an object indicator and/or the object identification to be displayed in the display (step 325 of FIG. 3). Again, the object indicator identifies or indicates in the display the presence of the object. In one embodiment, the processor identifies a detected position of the object in the video, and displays the object indicator at the detected position in the display. Processing then proceeds back to step 308.

Alternatively, if a signal loss is detected (or little or no signal is detected) in step 308, then the processor identifies whether a signal from the object was detected in N previous iterations (N = 1, 2, 3, ...) (step 320 of FIG. 3). If yes in step 326 (i.e. if signals were detected in the previous iteration but now lost), then the processor adds or updates an end timestamp in the metadata block for the object to be the current time of recording (step 328 of FIG. 3). The processor also causes any object indicator and/or object identification to be removed from the display (step 327 of FIG. 3). Processing then proceeds back to step 308.

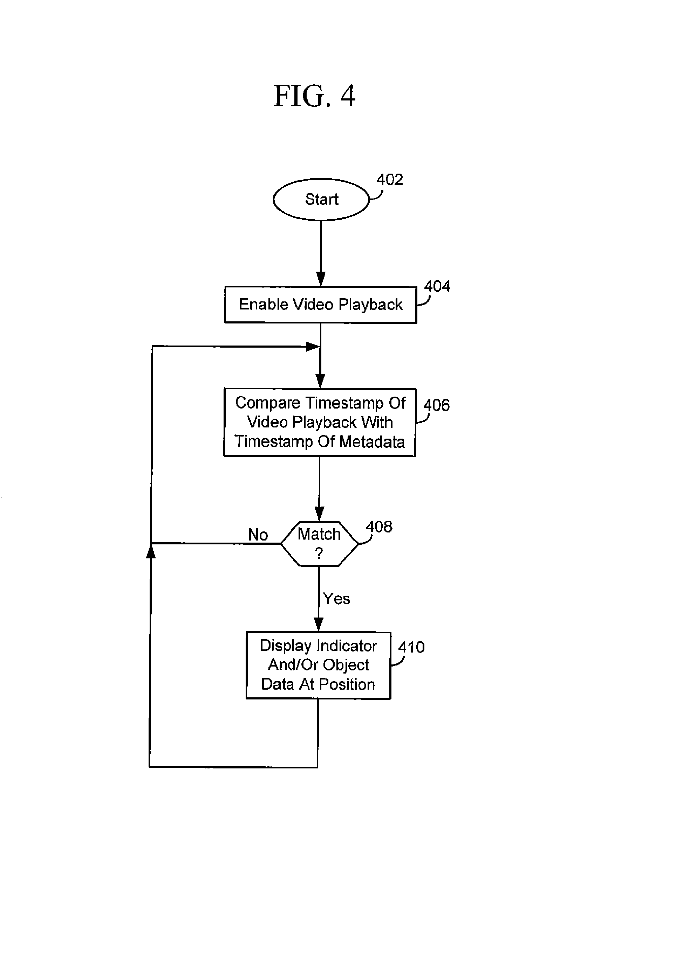

FIG. 4 is a flowchart which helps describe a method for use in providing object indicators during playback of a media file. Such methods may overcome the above-described deficiencies of the prior art in the above-described environment, or in related or similar environments. The methods may be executed by a mobile device (e.g. see description in relation to FIGS. 1-3 above). The methods may be further embodied in a computer program product which includes a computer readable medium (e.g. memory or disk, etc. in the mobile device) and computer instructions stored in the computer readable medium which are executable by one or more processors of the mobile device. The method of FIG. 4 may be performed for one or more different objects.

Beginning at a start block 402 of FIG. 4, the processor of the mobile device enables video playback in response to detecting a predetermined input (step 404 of FIG. 4). For example, the processor may enable video playback in response to detecting, via the user interface of the mobile device, an input request from the user to perform video playback. Here, the processor may activate the media recorder module to playback video data in the media file. The media file may be the one that was recorded as described in relation to FIG. 3 above, or in relation to FIG. 5 below.

During video playback, the processor operates to compare a current timestamp of the video playback with timestamp data in the metadata blocks (step 406 of FIG. 4). The current timestamp of the video playback corresponds to the current playback position in the video being played. If there is a match as identified in step 408, then the processor causes an object indicator and/or the object identification to be displayed in the display (step 410 of FIG. 4). Again, the object indicator identifies or indicates in the display the presence of the object. In one embodiment, the processor displays the object indicator at a detected position of the object in the display. Processing then proceeds back to step 406. If there is no match in step 408, then the processor causes any object indicator and/or object identification to be removed from the display, and proceeds back to step 406.

FIG. 5 is another flowchart which helps describe a method for use in providing object indicators during recording of a media file. Such methods may overcome the above-described deficiencies of the prior art in the above-described environment, or in related or similar environments. The methods may be executed by a mobile device (e.g. see description in relation to FIGs. 1-4 above). The methods may be further embodied in a computer program product which includes a computer readable medium (e.g. memory or disk, etc. in the mobile device) and computer instructions stored in the computer readable medium which are executable by one or more processors of the mobile device. The method of FIG. 5 may be performed for one or more different sensor devices in the mobile device and/or one or more different objects at the same time.

Note that, in the technique of FIG. 5, one or more metadata blocks for the media file are created during recording such that they may include one or more timestamp ranges (e.g. a plurality of timestamp ranges), where each timestamp range includes a start timestamp and an end timestamp, corresponding to the presence of an object in the video. The timestamps correspond to playback positions of the video. One difference between the techniques of FIG. 5 and FIG. 3 is that, in FIG. 5, each timestamp range is specifically associated with x-y coordinates corresponding to the x-y position of the object during the timestamp range. The mobile device may store these x-y coordinates in association with the timestamp, and/or display an object indicator at the x-y coordinates. Another difference between the techniques of FIG. 5 and FIG. 3 is that, in FIG. 5, the mobile device may produce, based on visual identification data, an image array of a representative image of the object and then detect from the video data an actual image of the object that matches the representative image of the object, where the actual image is positioned at x-y coordinates in the video.

Beginning at a start block 502 of FIG. 5, the processor of the mobile device enables video recording in response to detecting a predetermined input (step 504 of FIG. 5). For example, the processor may enable video recording in response to detecting, via the user interface of the mobile device, an input request from the user to perform video recording. Here, the processor may activate the media recorder module to record video data in a media file.

The mobile device also enables a sensor device (step 506 of FIG. 5), if not previously enabled. The sensor device is configured to receive and detect signals which indicate the presence of one or more objects within view and/or a nearby geographic location. These signals which indicate the presence of the object may be received or detected during a time period of the recording (step 508 of FIG. 5).

The sensor device may be a cellular transceiver, a WLAN or WiFi transceiver (e.g. IEEE 802.11 compliant, IEEE 802.16 compliant, etc.), a BLUETOOTH transceiver, a GPS receiver, an RF ID detector, as examples, of the mobile device. The sensor device may be a specifically manufactured sensor device for the type of object identification and description broadcasting described herein. Further, any computational platform capable of wireless communication with suitable software/firmware client embedded therein may be converted into such a sensor device for facilitating the type of object identification and description broadcasting described herein. Note again that the object itself may be associated with a corresponding object transceiver, transmitter, or component. The sensor device may therefore receive signals directly from such object component, or indirectly from the object component via a wireless network (e.g. a cellular network, a WLAN or WiFi network, etc.). In one embodiment, the sensor device receives from the wireless network signals which indicate the presence of one or more such objects within view and/or a nearby geographic location.

Next, the processor produces or obtains an image array corresponding to a representative image of the object (step 510 of FIG. 5). The processor may produce the image array if the object is newly identified or detected, otherwise the processor will merely obtain the stored image array from memory. In one embodiment, the processor receives and stores visual identification data for visually identifying the object. The visual identification data may be received from the sensor device itself (e.g. from step 508), or obtained through some other means. Here, the processor produces the image array of the representative image of the object based on the visual identification data. The visual identification data may be or include size and/or dimension data which is indicative of the size and/or dimensions of the object. In one embodiment, the visual identification data may be or include color code data which is indicative of the color of the object.

The processor further produces or obtains an image array corresponding to the actual image from the video data being recorded (step 512 of FIG. 5). The processor then searches for the representative image of the object in the actual image (step 514 of FIG. 5), in attempt to detect the object as well as the position of the object in the video. The step 514 of searching may involve several iterations of continued scanning through the actual image data. If there is a match (step 516 of FIG. 5), then the processor identifies x-y coordinates of the detected image in the video/display, and causes an object indicator and/or the object identification to be displayed in the display at the x-y coordinates (step 518 of FIG. 5). The object indicator identifies or indicates in the display the presence of the object.

The processor then identifies whether such detection is a new detection of the actual image (step 519 of FIG. 5). For example, a new detection of the actual image may be the first time that the actual image has been identified for the current recording session. If such detection is identified as "new" at step 519 (i.e. the first time that the actual image has been detected for the current recording session), then the processor creates a new metadata block for the object (530 of FIG. 5). The processor may also receive object data associated with the object, and store the object data in the newly-created metadata block for the object (step 532 of FIG. 5). The processor may receive and store the object data through the signals received via the sensor device. Alternatively, the processor may receive the object data via other means, such as retrieving the object data from a server via the wireless or cellular network.

The object data includes at least object identification which identifies the object. The object identification may identify the object by its name, with alphanumeric characters or text, for example. The object data may also include an address or link to a server, where the server is configured to communicate information regarding the object to the mobile device for display in response to a request from the mobile device (e.g. by "clicking" on the address or the link).

In step 534 of FIG. 5, the processor receives timestamp data corresponding to a current time of recording of the video data. The processor initializes or sets a start timestamp in the metadata block for the object to be the current time of recording. The processor also causes the x-y coordinates of the detected image to be stored in the metadata block in association with the timestamp. Processing then proceeds back to step 508.

If the detection of the actual image in step 516 is identified as not being new at step 519 (i.e, it is not the first time that the actual image has been detected for the current recording session), then the processor identifies whether the newly identified x-y coordinates of the detected image are within a predetermined distance or percentage from the previously stored x-y coordinates for the detected image (step 522 of FIG. 5). Here, a circle having a radius "r" around the previously stored x-y coordinates may be algorithmically determined, and it may be tested whether the Euclidian distance between the previously stored x-y coordinates and the newly identified x-y coordinates is equal to or less than the threshold of r. If so, then the newly identified x-y coordinates are contained within the circle, and the coordinates are deemed to be generally the same. Therefore, if yes at step 522, then the processor retains the previously stored x-y coordinates for the object in the metadata block (i.e. without including, adding, or storing the newly identified x-y coordinates). The processor includes or adds an additional timestamp in the metadata block to be the current time of recording (step 524 of FIG. 3).

In one embodiment, step 524 may involve updating the end timestamp in the metadata block for the object to be the current time of recording. In another embodiment, no adding or updating is performed in step 524, as the end timestamp will be updated later in step 536 when the image is lost (as described later below). Processing then proceeds back to step 508.

On the other hand, the processor identifies in step 522 whether the x-y coordinates of the detected image are outside of the predetermined distance or percentage of the previously stored x-y coordinates for the detected image. Here, using the circle having the radius "r" around the previously stored x-y coordinates which was algorithmically determined, it may be tested whether the Euclidian distance between the previously stored x-y coordinates and the newly identified x-y coordinates is greater than the threshold of the r. If so, then the newly identified x-y coordinates are outside of the circle, and the coordinates are deemed to be different from each other. Therefore, if yes in step 522, then the processor sets an end timestamp to be the current time of recording for association with the previously stored x-y coordinates (step 526 of FIG. 5). In addition, the processor causes the newly-identified x-y coordinates of the detected image to be stored in the metadata block, and sets a new start timestamp to be the current time of recording for association with these new coordinates (step 528 of FIG. 5). Processing then proceeds back to step 508.

Alternatively, if there is no match in step 516, then the processor adds or updates an end timestamp to be the current time of recording in association with the previously-identified x-y coordinates (step 536 of FIG. 5). The processor also causes any object indicator and/or object identification to be removed from the display (step 538 of FIG. 5). Processing then proceeds back to step 308. Processing then proceeds back to step 508.

From the technique of FIG. 5, what is produced and stored are one or more metadata blocks associated with a media file. Each metadata block includes object data corresponding to at least an identification of an object which is present at one or more playback positions in the media file. Each metadata block also includes timestamp data corresponding to the one or more playback positions in the media file during which the object is present. Each metadata block further includes x-y coordinate data corresponding to an x-y position of the object provided at the one or more playback positions. The timestamp data in a metadata block may include one or more timestamp ranges, where each timestamp range includes a start timestamp and an end timestamp, and is associated with x-y coordinates corresponding to the x-y position of the object during the timestamp range. Sometime, the media file will be played by the media player. During playback of the media file, when a current playback position of the media file matches one of the playback positions in the metadata block, the x-y coordinate data corresponding to the current playback position are read. An object indicator is then displayed, over or adjacent to the object, at the x-y position associated with the x-y coordinate data read from the identified metadata block.

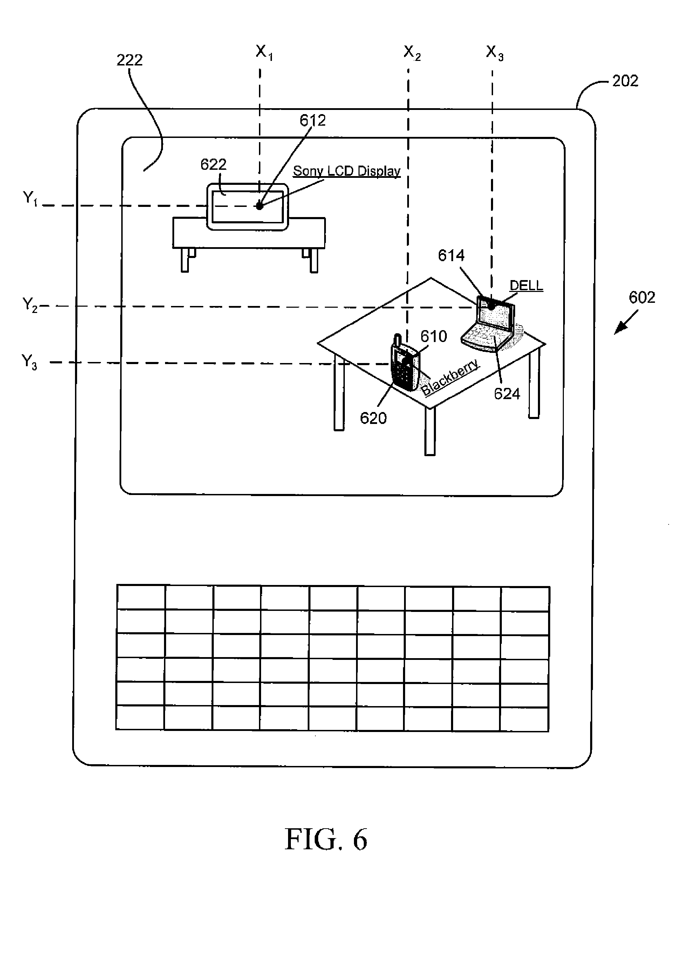

In one embodiment, the FIG. 6 is an illustrative depiction of the mobile device 202 having display 222 for displaying video recording or playback per the techniques of the present disclosure (e.g. FIGs. 3-5). In this example, what is shown in display 222 during recording/pfayback using the media recorder/player are a plurality of different objects 620, 622, and 624. Here, object 620 is a wireless communication device which is a BLACKBERRY^{™} communication device, object 622 is a television monitor which is a SONY LCD^{™} display, and object 624 is a computer which is a DELL^{™} laptop computer.

In FIG. 6, object 620 is identified by an object indicator 610 (in this example, a small marker or "dot") which is positioned at the appropriate x-y coordinates on or adjacent to object 620. An object identification for object 620 is also provided, the object identification comprising text and indicating "BLACKBERRY". The objection identification may further be a hypertext link which causes information regarding the BLACKBERRY^{™} communication device to be retrieved and displayed in display 222 upon selection of the same. In addition, object 622 is identified by an object indicator 612 which is positioned at the appropriate x-y coordinates on or adjacent to object 622. An object identification for object 622 is also provided, the object identification comprising text and indicating "SONY LCD DISPLAY". The objection identification may further be a hypertext link which causes information regarding the SONY LCD^{™} communication device to be retrieved and displayed in display 222 upon selection of the same. Finally, object 624 is identified by an object indicator 614 which is positioned at the appropriate x-y coordinates on or adjacent to object 624. An object identification for object 624 is also provided, the object identification comprising text and indicating "DELL". Similar to the others, the objection identification may further be a hypertext link which causes information regarding the DELL^{™} laptop computer to be retrieved and displayed in display 222 upon selection of the same.

Thus, as described herein, techniques for use in providing object indicators for video recording and/or playback have been devised. A mobile communication device includes a media recorder/player module and a sensor device. The media recorder module is used to record video data in a media file. The sensor device detects signals which indicate the presence of an object during a time period of recording. The mobile device receives object data comprising an identification of the object, and stores the object data in association with timestamp data which corresponds to the time period during which the object is present during the recording. In the technique, the mobile device may identify a detected position of the object in the video, and store position data corresponding to the detected position of the object in association with the timestamp data. In particular, for example, the mobile device may receive via the sensor device visual identification data for visually identifying the object. The mobile device produces, based on the visual identification data, an image array of a representative image of the object. The mobile device may then detect from the video data an actual image of the object that matches the representative image of the object. The actual image being positioned at x-y coordinates in the video. The mobile device may then store the x-y coordinates in association with the timestamp, and/or display an object indicator at the x-y coordinates.

A related technique for use in providing object indicators during playback of a media file involves one or one or more metadata blocks associated with the media file. Each metadata block includes object data corresponding to an identification of an object which is present at one or more playback positions in the media file, timestamp data corresponding to the one or more playback positions in the media file during which the object is present, and x-y coordinate data corresponding to an x-y position of the object provided at the one or more playback positions. When a current playback position of the media file matches one of the playback positions in the metadata block, the x-y coordinate data corresponding to the current playback position is read. An object indicator is then displayed, over or adjacent to the object, at the x-y position associated with the x-y coordinate data read from the identified metadata block.

The above-described embodiments of the present application are intended to be examples only. Those of skill in the art may effect alterations, modifications and variations to the particular embodiments without departing from the scope of the application. The invention described herein in the recited claims intends to cover and embrace all suitable changes in technology.

## Claims

1. A method for use in a mobile communication device which includes a media recorder module and a sensor device, the method comprising:
recording, via the media recorder module, video data in a media file;
detecting, at the sensor device, signals which indicate the presence of an object during a time period of the recording;
receiving object data comprising an identification of the object; and
storing the object data in association with timestamp data which corresponds to the time period during which the object is present during the recording.

2. The method of claim 1, wherein the sensor device comprises one of a cellular transceiver, a WLAN transceiver, a BLUETOOTH transceiver, a GPS receiver, and an RF ID detector.

3. The method of claim 1 or claim 2, further comprising:
identifying a detected position of the object; and
storing position data corresponding to the detected position of the object in association with the timestamp data.

4. The method of claim 1 or claim 2, further comprising:
identifying a detected position of the object; and
displaying an object indicator at the detected position.

5. The method of claim 1 or claim 2, further comprising:
identifying x-y coordinate data corresponding to a detected position of the object; and
storing the x-y coordinate data in association with the timestamp data.

6. The method of any one of claims 1-5, further comprising:
receiving via the sensor device visual identification data for visually identifying the object.

7. The method of any one of claims 1-6, further comprising:
receiving via the sensor device visual identification data for visually identifying the object;
producing, based on the visual identification data, an image array of a representative image of the object; and
detecting from the video data an actual image of the object that matches the representative image of the object.

8. The method of any one of claims 1-7, wherein the visual identification data comprises color code data.

9. The method of any one of claims 1-8, further comprising:
receiving via the sensor device visual identification data for visually identifying the object;
producing, based on the visual identification data, an image array of a representative image of the object;
detecting from the video data an actual image of the object that matches the representative image of the object, the actual image being positioned at x-y coordinates; and
displaying an object indicator at the x-y coordinates.

10. A computer program product, comprising:
a computer readable medium;
computer instructions stored in the computer readable medium; and
the computer instructions being executable by one or more processors of a mobile communication device to perform the method of any one of claims 1-9.

11. A mobile communication device, comprising:
one or more processors;
a radio frequency (RF) transceiver coupled to the one or more processors;
a multimedia recording module coupled to the one or more processors, the multimedia recording module being configured to record video data in a media file;
a sensor device coupled to the one or more processors, the sensor device being configured to detect signals which indicate the presence of an object during a time period of the recording; and
the one or more processors being configured to perform the method of any one of claims 1-9.

12. A method for use in providing object indicators during playback of a media file, the method comprising:
storing one or more metadata blocks, wherein:
each said metadata block includes object data corresponding to an identification of an object which is present at one or more playback positions in the media file;
each said metadata block including timestamp data corresponding to the one or more playback positions in the media file during which the object is present;
each said metadata block including x-y coordinate data corresponding to an x-y position of the object provided at the one or more playback positions;
when a current playback position of the media file matches one of the playback positions in the metadata block:
reading the x-y coordinate data corresponding to the current playback position; and
causing an object indicator to be displayed, over or adjacent to the object, at the x-y position associated with the x-y coordinate data read from the identified metadata block.

13. The method of claim 12, wherein the object indicator includes the identification of the object.
